# EUROPÄISCHE PATENTANMELDUNG

(11) **EP 2 620 270 A1**
(43) Veröffentlichungstag der Anmeldung: **31.07.2013**
(21) Anmeldenummer: 12153180.0
(22) Anmeldetag: 30.01.2012
(51) Int. Cl.: B29C 70/78, B29C 43/00, B29C 45/14, B29C 69/02

(54) **Strukturbauteile mit dekorativer Oberfläche**

(71) Anmelder: Quadrant Plastic Composites AG, 5600 Lenzburg (CH)
(72) Erfinder: Schimanski, Tilo, 6430 Schwyz (CH)
(74) Vertreter: Schmauder & Partner AG Patent- & Markenanwälte VSP

(57) **Zusammenfassung**

Ein Verfahren zur Herstellung von Strukturbauteilen mit dekorativer Oberfläche durch Umformen eines flächigen Halbzeugs aus Polypropylen oder einem Polyamid, welches lange Verstärkungsfasern enthält, in einem ersten Werkzeug, Einlegen des dabei erhaltenen Rohbauteils in ein zweites Werkzeug, dessen obere Hälfte eine polierte oder strukturierte Oberfläche aufweist, Einspritzen einer flüssigen Polyol/Isocyanat- bzw. Polyamin/Isocyanat-Mischung in den Spalt zwischen dem Werkzeugoberteil und dem Rohbauteil und Aushärten der Mischung zu einer Polyurethan- bzw. Polyharnstoff-Oberflächenschicht.

## Beschreibung

Die Erfindung betrifft ein Verfahren zur Herstellung von Strukturbauteilen mit dekorativer Oberfläche durch thermoplastisches Umformen eines Halbzeugs aus mit Langfasern verstärktem Polypropylen oder Polyamid.

Strukturbauteile auf Basis von faserverstärkten thermoplastischen Kunststoffen werden in verstärktem Mass beispielsweise im Automobilbau eingesetzt, wo sie zur Gewichtsersparnis und damit auch zu einem geringeren Treibstoffverbrauch beitragen. Besonders häufig werden Teile aus glasmattenverstärktem Polypropylen (GMT) und mit Langglasfasern verstärktem Polypropylen (LFT) verwendet, da aus den entsprechenden Halbzeugen in einem einzigen Pressvorgang mit kurzen Taktzeiten auch komplizierte Teile herstellbar sind. Bei Bauteilen im Sichtbereich wäre es wünschenswert, ihnen eine dekorative Oberfläche zu verleihen, diese also zum Beispiel farbig oder hochglänzend zu gestalten.

Beim Versuch, Bauteile aus mit Langfasern verstärktem Polypropylen mit einer einem Stahlblech gleichwertigen Oberfläche herzustellen, ergeben sich aber zwei gravierende Probleme: sogenannte Oberflächenfehler und mangelnde Lackhaftung. Das zweite Problem kann bei Bauteilen auf Basis von Polypropylen, das mit Glasmatten verstärkt ist, ansatzweise durch ein in EP-A 794 214 beschriebenes Verfahren gelöst werden. Dort werden ein spezielles Polypropylen mit hohem Schmelzindex und gut expandierbare Glasmatten eingesetzt. Damit lässt sich aber das erste Problem nicht lösen.

Bei der Herstellung von Bauteilen aus Verstärkungsfasern enthaltenden Halbzeugen durch Formpressen lässt es sich nämlich nicht vermeiden, dass herausstehende Fasern sich an der Oberfläche des Bauteils abzeichnen, und dass diese Unregelmässigkeiten auch beim Lackieren oder beim Laminieren mit einer glänzenden oder eingefärbten Folie erhalten bleiben. Um eine hinreichend gute Oberfläche zu erzielen, muss ein Bauteil aus mit Langfasern verstärktem Polypropylen vor dem Lackieren zeit- und kostenaufwendig vorbehandelt werden.

Bei einem Bauteil mit einer unpolaren Thermoplastmatrix, z.B. Polypropylen, muss zunächst die Oberfläche aktiviert werden, damit die darauf aufbauenden Schichten eine gute Anhaftung habe. Dies geschieht üblicherweise durch Beflammen oder Corona- oder Plasmabehandlung. Anschliessend wird eine Primerschicht aufgebracht, die nach dem Trocknen mittels Spachteln und Schleifen geglättet werden muss. Erst dann kann die Lackierung erfolgen.

Der Erfindung lag also die Aufgabe zugrunde, bei der Herstellung von Strukturbauteilen aus mit Langfasern verstärktem Polypropylen und Polyamid diese Nachteile zu vermeiden und Bauteile mit dekorativer Oberfläche bereitzustellen

Diese Aufgabe wird durch das erfindungsgemässe Verfahren nach Anspruch 1 gelöst.

Das Prinzip dieses Verfahrens entspricht etwa einem Verfahren, wie es zum Beispiel in der DE-C 43 16 154 beschrieben ist. Dort fehlen allerdings Hinweise auf die Art des Kunststoffs, das Problem der herausstehenden Fasern ist nicht angesprochen, und zur Oberflächenbeschichtung wird ein andersartiges Harz, nämlich ein Polyesterharz eingefüllt. Ein weiteres, allerdings recht kompliziertes Verfahren ist in der DE-A 10 2006 049 913 beschrieben, wobei allerdings als Kunststoff für das Bauteil ein vernetztes, duromeres Kunstharz eingesetzt wird. In keiner der beiden Druckschriften finden sich Hinweise auf Strukturbauteile aus mit Langfasern verstärktem Polypropylen oder Polyamid.

Bei dem erfindungsgemässen Verfahren wird zunächst ein erwärmter Halbzeugzuschnitt auf bekannte Weise in einem ersten Werkzeug zu einem Rohbauteil mit der gewünschten Form thermoplastisch verpresst. Das Werkzeugoberteil kann eine ebene Oberfläche haben, es sind aber je nach der gewünschten Form des Bauteils auch nicht-ebene Oberflächen möglich, die z.B. Radien, Kanten oder Rippen aufweisen. Dieses Rohbauteil weist noch die unerwünschte raue Oberfläche auf.

Bevorzugte Zuschnitte sind die bekannten flächigen GMT-Halbzeuge mit einer Polypropylen-Matrix und 10 bis 70 Gew.-% einer vernadelten Glasfasermatte. Die Kunststoffmatrix kann auch ein Polyamid sein. Auch GMTex-Halbzeuge sind geeignet, bei denen Glasfasermatten mit Glasfasergewebe oder -gelege vernadelt sind. Weiterhin können die Zuschnitte auch LFT- oder D-LFT-Halbzeuge sein, die durch Extrusion einer Mischung von Polypropylen und Glasfaser-Rovings hergestellt werden. Die Verstärkungsfasern können grundsätzlich auch Kohlenstofffasern sein. Die Fasern sollten mindestens 5 mm, insbesondere 20 bis 120 mm lang sein.

Das Rohbauteil wird dann in ein zweites Werkzeug, dessen obere Hälfte eine polierte oder speziell strukturierte Oberfläche aufweist, eingelegt. Alternativ kann das Bauteil auch in der unteren Hälfte des Presswerkzeugs verbleiben, und man wechselt nur die obere Hälfte des Presswerkzeugs gegen ein zweites Werkzeugoberteil mit einer polierten oder speziell strukturierten Oberfläche aus. Der Begriff "zweites Werkzeug" soll also hier auch ein Werkzeug umfassen, das aus dem ersten Werkzeug durch Umrüsten der oberen Werkzeughälfte hervorgeht. Wesentlich ist, dass nach dem Zufahren des zweiten Werkzeugs zwischen dem Werkzeugoberteil und dem Rohbauteil ein 0.1 bis 3.0 mm, vorzugsweise ein 0.4 bis 2.0 mm breiter Spalt verbleibt. Wenn sich der Spalt auch noch teilweise bis in die Unterseite des Rohbauteils erstreckt, lässt sich ein Umbug verwirklichen. In diesem Fall sollte dann auch vorzugsweise der Unterteil des zweiten Werkzeugs ausgewechselt werden, da man sonst aufwendige Schieberkonstruktionen benötigt, um auch auf der Bauteilunterseite einen entsprechenden Spalt zu realisieren. Die obere Werkzeugoberfläche ist vorzugsweise poliert, in besonderen Fällen kann sie auch eine spezielle Struktur aufweisen, wenn man z.B. auf dem Bauteil eine mattierte oder eine genarbte Oberfläche erzeugen will.

Im nächsten Verfahrensschritt wird dann in den Spalt zwischen dem Werkzeugoberteil und dem Rohbauteil eine flüssige Polyol/Isocyanat- bzw. Polyamin/Isocyanat-Mischung eingespritzt. Die Mischung wird kurz vor dem Einspritzen durch Vermischen der beiden Polyurethan- bzw. Polyharnstoff-Komponenten in einem Mischkopf hergestellt. Das Einspritzen geschieht zweckmässigerweise durch eine Zuleitung in die Werkzeugtrennebene hinein, um einen Anguss-Punkt auf der Sichtfläche zu vermeiden.

Flüssige Polyol/Isocyanat-Mischungen bzw. Polyamin/Isocyanat-Mischungen als Polyurethan-Vorläufer bzw. Polyharnstoff-Vorläufer sind an sich bekannt und in der einschlägigen Literatur ausführlich beschrieben. Geeignet sind beispielsweise Mischungen aus Diisocyanaten und Polyetherdiolen oder Polyesterdiolen bzw. Mischungen aus Diisocyanaten und Polyetherdiaminen oder Asparaginsäureestern.

Die Zusammensetzung der Mischungen wird so gewählt, dass die jeweiligen Anforderungen an das Strukturbauteil zum Beispiel hinsichtlich UV-Beständigkeit und Kratzfestigkeit gewährleistet sind. Die jeweilige genaue Zusammensetzung kann der Fachmann durch Vorversuche ermitteln. Die flüssige Polyol/Isocyanat- bzw. Polyamin/Isocyanat-Mischung überflutet die Oberfläche des Rohbauteils, so dass dessen Unregelmässigkeiten in der Oberfläche abgedeckt werden. Von Vorteil ist, dass nur die effektive Oberfläche des Rohbauteils überflutet werden muss. Wenn das Bauteil zum Beispiel ein Fenster oder ein Sonnendachrahmen ist, muss nur dieser Rahmen, nicht aber der Raum dazwischen überflutet werden.

Die eingespritzte flüssige Polyol/Isocyanat- bzw. Polyamin/Isocyanat-Mischung lässt man dann bei geschlossenem Werkzeug bei Raumtemperatur oder leichtem Erwärmen, vorzugsweise unter Beaufschlagung eines Drucks, aushärten. Je nach Zusammensetzung der Mischung kann dabei die Temperatur auf etwa 80 bis 100°C ansteigen.

Strukturbauteile mit eingefärbter Oberfläche können hergestellt werden, wenn man einen vorkolorierten Polyol- bzw. Polyamin-Masterbatch verwendet oder als dritte Komponente in den Mischkopf Farbpigmente zuführt.

Mit dem erfindungsgemässen Verfahren können Strukturbauteile mit hochglänzenden, glatten Oberflächen, sogenannte Class-A-Oberflächen hergestellt werden, sowie auch solche mit farbigen Oberflächen. Der Glanzgrad kann durch Verwendung einer mehr oder weniger stark mattierten Werkzeugoberfläche eingestellt werden.

Eine weiter verbesserte Haftung der Polyurethan- bzw. Polyharnstoff-Deckschicht an dem Rohbauteil kann mit den Verfahren nach den Ansprüchen 2 oder 3 erzielt werden. Dies ist dann vorteilhaft, wenn die Thermoplastmatrix ein unpolares Propylen-Homopolymeres ist.

Bei einem der bevorzugten Verfahren wird die Oberfläche des Rohbauteils vor dem Einspritzen der flüssigen Polyol/Isocyanat- bzw. Polyamin/Isocyanat-Mischung auf bekannte Weise beflammt oder einer Corona- oder Plasmabehandlung unterworfen und dadurch aktiviert.

Bei einem weiteren bevorzugten Verfahren wird in dem ersten Presswerkzeug an der oberen Werkzeughälfte ein Polyestervlies fixiert, das vorzugsweise ein Flächengewicht von 30 bis 300 g/cm², insbesondere von 50 bis 200 g/cm² aufweist. Dann wird der Halbzeugzuschnitt eingelegt und so verpresst, dass die flüssige Thermoplastmatrix nur teilweise in das Vlies eindringt. Dies kann durch geeignete Wahl der Viskosität des Matrixpolymeren, der Temperatur und dem Druck beim Verpressen sowie durch das optimale Flächengewicht des Vlieses erreicht werden. Diese Bedingungen kann der Fachmann leicht durch Vorversuche ermitteln. Nach dem Abkühlen ist das Polyestervlies durch mechanische Verankerung der Polyesterfasern in der Thermoplastmatrix rückseitig mit dem Rohbauteil verbunden.

Beim anschliessenden Überfluten des Rohbauteils mit der flüssigen Mischung in dem zweiten Werkzeug dringt die Mischung in die obere Schicht des Vlieses ein, die nicht mit dem Matrixpolymer getränkt ist. Nach dem Aushärten des Polyurethans bzw. Polyharnstoffs ist das Polyestervlies dann auch formschlüssig mit der Deckschicht verbunden. Wenn das Polyestervlies mit Farbpigmenten bedruckt ist, beispielsweise nach dem bekannten Sublimationsdruckverfahren, können auch Strukturbauteile mit einer mehrfarbigen Dekoroberfläche hergestellt werden. Beim Überfluten wird dann eine transparente Polyol/Polyisocyanat- bzw. Polyamin/Isocyanat-Mischung eingesetzt.

Die nach dem erfindungsgemässen Verfahren hergestellten Strukturbauteile mit dekorativer Oberfläche können im Fahrzeugbau für Aussen- und Innenraum-Komponenten verwendet werden, aber beispielsweise auch als Bauteile für die Sport- und Möbelindustrie.

## Patentansprüche

1. Verfahren zur Herstellung von Strukturbauteilen mit dekorativer Oberfläche durch thermoplastisches Umformen eines flächigen Halbzeugs aus Polypropylen oder einem Polyamid, welches 10 bis 70 Gew.-% Verstärkungsfasern einer Länge von mindestens 5 mm enthält,
**dadurch gekennzeichnet, dass** man
a) das Halbzeug in einem ersten Werkzeug zu einem Rohbauteil mit der gewünschten Form thermoplastisch verpresst,
b) das Rohbauteil in ein zweites Werkzeug, dessen Oberteil eine polierte oder besonders strukturierte Oberfläche aufweist, so einlegt, dass zwischen dem Werkzeugoberteil und dem Rohbauteil ein 0.1 bis 3.0 mm breiter Spalt verbleibt,
c) in den Spalt zwischen dem Werkzeugoberteil und dem Rohbauteil eine flüssige Polyol/Isocyanat- oder Polyamin/Isocyanat Mischung einspritzt,
d) diese Mischung zu einer Polyurethan- bzw. Polyharnstoff-Oberflächenschicht aushärten lässt, und
e) das Werkzeug öffnet und das fertige Strukturbauteil entnimmt.

2. Verfahren nach Anspruch 1, **dadurch gekennzeichnet, dass** man die Oberfläche des Rohbauteils vor dem Einspritzen der flüssigen Polyol/Isocyanat bzw. Polyamin/Isocyanat-Mischung beflammt oder einer Corona- oder Plasma- Behandlung unterzieht.

3. Verfahren nach Anspruch 1, **dadurch gekennzeichnet, dass** man beim Schritt a) in das erste Werkzeug an der oberen Werkzeughälfte ein Polyestervlies mit einem Flächengewicht von 30 bis 300 g/cm² fixiert, dann das Halbzeug einlegt und so verpresst, dass die flüssige Thermoplastmatrix des Halbzeugs nur teilweise in das Vlies eindringt.

4. Verfahren zur Herstellung von Strukturbauteilen mit eingefärbter Oberfläche nach Anspruch 1, **dadurch gekennzeichnet, dass** man beim Schritt c) vorkolorierte Polyol- bzw. Polyamin- Masterbatches verwendet oder als dritte Komponente Farbpigmente zuführt.

5. Verfahren zur Herstellung von Strukturbauteilen mit eingefärbter Oberfläche nach Anspruch 3, **dadurch gekennzeichnet, dass** das Polyestervlies mit Farbpigmenten bedruckt ist.
